# EUROPEAN PATENT APPLICATION

(11) **EP 3 236 346 A1**
(43) Date of publication of application: **25.10.2017**
(21) Application number: 16186431.9
(22) Date of filing: 30.08.2016
(51) Int. Cl.: G06F 3/16, G06F 3/0481

(54) **AN APPARATUS AND ASSOCIATED METHODS**

(30) Priority: 22.04.2016 EP 16166692
(71) Applicant: Nokia Technologies Oy, 02610 Espoo (FI)
(72) Inventor: Eronen, Antti Johannes, 33820 Tampere (FI); Lehtiniemi, Arto Juhani, 33880 Lempäälä (FI); Leppänen, Jussi Artturi, 33580 Tampere (FI); Cricri, Francesco, 33200 Tampere (FI)
(74) Representative: Potter Clarkson LLP

(57) **Abstract**

An apparatus configured to, based on a location of a plurality of distinct audio sources in virtual reality content captured of a scene, a first virtual reality view providing a view of the scene from a first point of view, wherein at least two of said audio sources are one or more of: a) within a first predetermined angular separation of one another in the first virtual reality view, b) positioned in the scene such that not all are within the field of view,
provide for display of a second virtual reality view from second point of view satisfying a predetermined criterion, the predetermined criterion comprising a point of view from which said audio sources are separated by at least a second predetermined angular separation and are within a field of view of the second virtual reality view to provide for control of audio properties of said audio sources.

## Description

### Technical Field

The present disclosure relates to the field of control of audio properties of a plurality of distinct audio sources in virtual reality, associated methods, computer programs and apparatus. Certain disclosed aspects/examples relate to a virtual reality apparatus, a virtual reality content capture device, a portable electronic devices, in particular, virtual reality headsets/glasses, so-called hand-portable electronic devices which may be hand-held in use (although they may be placed in a cradle in use). Such hand-portable electronic devices include so-called Personal Digital Assistants (PDAs), mobile telephones, smartphones and other smart devices, smartwatches and tablet PCs.

The portable electronic devices/apparatus according to one or more disclosed aspects/embodiments may provide one or more audio/text/video/data communication functions (e.g. tele-communication, video-communication, and/or text transmission (Short Message Service (SMS)/Multimedia Message Service (MMS)/e-mailing) functions), interactive/non-interactive viewing functions (e.g. web-browsing, navigation, TV/program viewing functions), music recording/playing functions (e.g. MP3 or other format and/or (FM/AM) radio broadcast recording/playing), downloading/sending of data functions, image capture functions (e.g. using a (e.g. in-built) digital camera), and gaming functions.

### Background

The capture of virtual reality content is becoming more common, with virtual reality content producers producing different types of virtual reality content. For example, the virtual reality content may be created from panoramic or omni-directionally captured views of the real world, such as at events, concerts or other performances. Ensuring such virtual reality content has high production values is important. Further the ability to easily control the production of the virtual reality content is important.

The listing or discussion of a prior-published document or any background in this specification should not necessarily be taken as an acknowledgement that the document or background is part of the state of the art or is common general knowledge. One or more aspects/examples of the present disclosure may or may not address one or more of the background issues.

### Summary

In a first example aspect there is provided an apparatus comprising at least one processor and at least one memory including computer program code, the at least one memory and the computer program code configured to, with the at least one processor, cause the apparatus to perform at least the following:
based on a spatial location of each of a selected plurality of distinct audio sources in virtual reality content captured of a scene, a first virtual reality view providing a view of the scene from a first point of view and having a field of view less than the spatial extent of the virtual reality content, wherein at least two of said selected plurality of distinct audio sources are one or more of:
   a) within a first predetermined angular separation of one another in the first virtual reality view,
   b) positioned in the scene such that a first of the at least two selected distinct audio sources is within the field of view of the first virtual reality view and a second of the at least two selected distinct audio sources is outside the field of view of the first virtual reality view, and
   c) positioned in the scene such that the at least two of said selected plurality of distinct audio sources have an angular separation from the first point of view greater than an angular extent of the field of view of the first virtual reality view;
provide for display of a second virtual reality view from a different, second point of view, said second point of view satisfying a predetermined criterion, the predetermined criterion comprising a point of view from which said at least two of said selected plurality of distinct audio sources are separated by at least a second predetermined angular separation in the second virtual reality view and the at least two selected distinct audio sources are within a field of view of the second virtual reality view to thereby provide for one or more of (i) individual selection and control, in the second virtual reality view, of audio properties of said at least two distinct audio sources and (ii) viewing of the selected plurality of distinct audio sources in the second virtual reality view.

In one or more embodiments the second predetermined angular separation in the second virtual reality view is greater than a first predetermined angular separation of the at least two of said selected plurality of distinct audio sources in the first virtual reality view. In one or more embodiments, the apparatus is caused to provide for display of the second virtual reality view based on one or more of (a) and (b) irrespective of (c) and said provision for display thereby provides for (i) irrespective of (ii).

In one or more examples, the second virtual reality view from the different, second point of view comprises a computer-generated model of the scene in which said distinct audio sources are each represented by an audio-source-graphic provided at virtual locations in said computer-generated model corresponding to their geographical location in the scene.

In one or more examples, the computer-generated model is based on one or more of:
i) geographic location information of the distinct audio sources,
ii) spatial measurements of said scene from one or more sensors,
iii) a depth map provided by a virtual reality content capture device configured to capture the virtual reality content for provision of the first virtual reality view,
iv) a depth map provided by a virtual reality content capture device configured to capture virtual reality content of the scene from a different point of view compared to the first point of view,
v) a predetermined model of the scene.

In one or more examples, said first virtual reality view is provided by video imagery of the scene.

In one or more examples, the computer-generated model of the scene comprises a wire frame model of one or more features in the scene.

In one or more examples, the second virtual reality view from the different, second point of view is provided by video imagery captured by a second virtual reality content capture device different to a first virtual reality content capture device that provided the virtual reality content for the first virtual reality view.

In one or more examples, where the first virtual reality view is provided by one of a plurality of VR content capture devices configured to capture a scene containing the selected plurality of distinct audio sources from different points of view,
and based on a determination that at least one other of the plurality of VR content capture devices is located at a point of view in which each of the selected plurality of distinct audio sources are separated by at least the second predetermined angular separation, the apparatus is configured to provide for display of the virtual reality content captured by the determined one other VR content capture device as the second virtual reality view from the different, second point of view.

In one or more examples, on transition between the first virtual reality view and display of the second virtual reality view, the apparatus provides for display of one or more intermediate virtual reality views, the intermediate virtual reality views having points of view that lie spatially intermediate the first and second point of views.

In one or more examples, wherein the apparatus, during display of said second virtual reality view, is configured to provide for presentation of audio of at least the selected distinct audio sources with a spatial audio effect such that audio generated by each of the audio sources is perceived as originating from their position in the second virtual reality view of the audio source.

In one or more examples, wherein the apparatus provides for display, at least in the second virtual reality view, of an audio control graphic to provide one or more of:
i) feedback of the control of the audio properties associated with one or more of the distinct audio sources; and
ii) a controllable user interface configured to, on receipt of user input thereto, control the audio properties associated with one or more of the distinct audio sources.

In one or more examples, the audio control graphics are provided for display at a position in at least the second virtual reality view to associate it with the audio source it represents.

In one or more examples, the apparatus is caused to provide for display of the second virtual reality view in response to a user instruction to change from the first virtual reality view.

In one or more examples, the user instruction comprises a user input to drag at least one of the at least two selected plurality of distinct audio sources at least towards a second of the at least two selected plurality of distinct audio sources.

In one or more examples, the apparatus is caused to provide for, during the drag user input, presentation of audio of at least the selected distinct audio source being dragged with a spatial audio effect such that audio generated by the audio source being dragged is perceived as originating from its current virtual position during the drag user input. Thus, in one or more examples, the current virtual position may be the current position of a dragged-audio-source graphic representing the dragged audio source.

In one or more examples, the apparatus is caused to provide feedback, to the user, of the drag user input by providing for one or more of i) display of a dragged-audio-source graphic to show the position of the audio source being dragged and ii) presentation of spatial audio of the distinct audio source being dragged to audibly indicate the position of the audio source being dragged.

In one or more examples, the second virtual reality view from the different, second point of view is provided by video imagery captured by a second virtual reality content capture device different to a first virtual reality content capture device that provided the virtual reality content for the first virtual reality view; and
the apparatus is caused to provide for drag-position-is-valid feedback to the user based on determination of when, during the drag user input, the position of the dragged audio source corresponds with the separation of the corresponding audio source in the second virtual reality view.

This may be advantageous as the user can drag the audio source around the scene and feedback is provided when the apparatus is able (or has the VR content available) to provide a second virtual reality view in which the distinct audio sources have an angular separation corresponding to the angular separation where the user has currently dragged the distinct audio source. The feedback may be provided by one or more of display of a valid-position graphic, haptic feedback and presentation of audio feedback.

In one or more examples, said audio feedback is provided by one or more of
i) presenting audio of the dragged audio source with an audio effect;
ii) presenting audio of the dragged audio source with an audio effect removed.

In one or more examples, the display of valid-position graphic comprises a modification to the dragged-audio-source graphic. In one or more examples, the valid-position graphic comprises one or more of an at least partial outline around the dragged-audio-source graphic, a highlight effect of the dragged-audio-source graphic and an un-ghosted version of the dragged-audio-source graphic.

In one or more examples, the first point of view and the second point of view lie in a substantially horizontal plane with respect to the first virtual reality view.

In one or more examples, wherein the selected plurality of distinct audio sources are one or more of:
i) user selected;
ii) automatically selected based on one or more of which distinct audio sources are actively providing audio and which are actively detected within the space. The activity of an audio source may be determined based on its generation of audio within a recent time window.

In one or more examples, following receipt of user input to control the audio properties of one or more of the selected distinct audio sources, provide for display of the first VR view.

In one or more examples, based on received user input to adjust audio properties of one or more of the distinct audio sources, providing for recording of the adjustments to the VR content.

In one or more examples, the apparatus provides for display of the second virtual reality view in response to a user instruction to change from the first virtual reality view.

In one or more examples, the apparatus is configured to, based on one or more audio sources in the VR view, adjust the audio level of said one or more audio sources to adopt a predetermined audio level set point set by receipt of user input.

In a further aspect there is provided a method, the method comprising, based on a spatial location of each of a selected plurality of distinct audio sources in virtual reality content captured of a scene, a first virtual reality view providing a view of the scene from a first point of view and having a field of view less than the spatial extent of the virtual reality content, wherein at least two of said selected plurality of distinct audio sources are one or more of:
a) within a first predetermined angular separation of one another in the first virtual reality view,
b) positioned in the scene such that a first of the at least two selected distinct audio sources is within the field of view of the first virtual reality view and a second of the at least two selected distinct audio sources is outside the first field of view of the first virtual reality view, and
c) positioned in the scene such that the at least two of said selected plurality of distinct audio sources have an angular separation from the first point of view greater than an angular extent of the field of view of the first virtual reality view;
providing for display of a second virtual reality view from a different, second point of view, said second point of view satisfying a predetermined criterion, the predetermined criterion comprising a point of view from which said at least two of said selected plurality of distinct audio sources are separated by at least a second predetermined angular separation in the second virtual reality view and the at least two selected distinct audio sources are within a field of view of the second virtual reality view to thereby provide for one or more of (i) individual selection and control, in the second virtual reality view, of audio properties of said at least two distinct audio sources and (ii) viewing of the selected plurality of distinct audio sources in the second virtual reality view.

In a further aspect there is provided a computer readable medium comprising computer program code stored thereon, the computer readable medium and computer program code being configured to, when run on at least one processor, perform at least the following:
based on a spatial location of each of a selected plurality of distinct audio sources in virtual reality content captured of a scene, a first virtual reality view providing a view of the scene from a first point of view and having a field of view less than the spatial extent of the virtual reality content, wherein at least two of said selected plurality of distinct audio sources are one or more of:
   a) within a first predetermined angular separation of one another in the first virtual reality view,
   b) positioned in the scene such that a first of the at least two selected distinct audio sources is within the field of view of the first virtual reality view and a second of the at least two selected distinct audio sources is outside the first field of view of the first virtual reality view, and
   c) positioned in the scene such that the at least two of said selected plurality of distinct audio sources have an angular separation from the first point of view greater than an angular extent of the field of view of the first virtual reality view;
providing for display of a second virtual reality view from a different, second point of view, said second point of view satisfying a predetermined criterion, the predetermined criterion comprising a point of view from which said at least two of said selected plurality of distinct audio sources are separated by at least a second predetermined angular separation in the second virtual reality view and the at least two selected distinct audio sources are within a field of view of the second virtual reality view to thereby provide for one or more of (i) individual selection and control, in the second virtual reality view, of audio properties of said at least two distinct audio sources and (ii) viewing of the selected plurality of distinct audio sources in the second virtual reality view.

In a further aspect there is provided an apparatus, the apparatus comprising means for, based on a spatial location of each of a selected plurality of distinct audio sources in virtual reality content captured of a scene, a first virtual reality view providing a view of the scene from a first point of view and having a field of view less than the spatial extent of the virtual reality content, wherein at least two of said selected plurality of distinct audio sources are one or more of:
a) within a first predetermined angular separation of one another in the first virtual reality view,
b) positioned in the scene such that a first of the at least two selected distinct audio sources is within the field of view of the first virtual reality view and a second of the at least two selected distinct audio sources is outside the first field of view of the first virtual reality view,
   and
c) positioned in the scene such that the at least two of said selected plurality of distinct audio sources have an angular separation from the first point of view greater than an angular extent of the field of view of the first virtual reality view;
providing for display of a second virtual reality view from a different, second point of view, said second point of view satisfying a predetermined criterion, the predetermined criterion comprising a point of view from which said at least two of said selected plurality of distinct audio sources are separated by at least a second predetermined angular separation in the second virtual reality view and the at least two selected distinct audio sources are within a field of view of the second virtual reality view to thereby provide for one or more of (i) individual selection and control, in the second virtual reality view, of audio properties of said at least two distinct audio sources and (ii) viewing of the selected plurality of distinct audio sources in the second virtual reality view.

The present disclosure includes one or more corresponding aspects, examples or features in isolation or in various combinations whether or not specifically stated (including claimed) in that combination or in isolation. Corresponding means and corresponding functional units (e.g., virtual reality graphic generator, audio processor, user input processor, user input feedback enabler, object creator) for performing one or more of the discussed functions are also within the present disclosure.

Corresponding computer programs for implementing one or more of the methods disclosed are also within the present disclosure and encompassed by one or more of the described examples.

In the above aspects the individual selection and control, in the second virtual reality view, of audio properties of said at least two distinct audio sources is provided as an example of properties that may be modified using the principles disclosed herein. In other examples, the individual selection and control, in the second virtual reality view, may be of properties (in general) of at least two distinct subjects present in the virtual reality content. Accordingly, reference to distinct audio sources may be more generally "distinct subjects" present in the virtual reality content, such as one or more of persons, characters, animals, instruments, objects and events. Such subjects may be identified manually in the virtual reality content or automatically by image recognition techniques, such as facial recognition when applied to persons. The properties that may be controlled may include one or more of audio properties, visual properties, and metadata properties associated with the subject. The visual properties may include one or more of luminosity, colour, or other aesthetic properties. The metadata properties may include one or more of a name of the subject, face identity information, links to other subjects within or outside the virtual reality content. Further, references to audio-source-graphics may be considered more generally as subject-graphics. Further, references to audio control graphics may be considered more generally as property control graphics which may provide feedback of the control of the properties associated with one or more of the distinct subjects; and/or a controllable user interface. Corresponding means and corresponding functional units may therefore include a video processor, a video editor, a digital content editor, an image recognition module for performing one or more of the discussed functions are also within the present disclosure.

The above summary is intended to be merely exemplary and non-limiting.

### Brief Description of the Figures

A description is now given, by way of example only, with reference to the accompanying drawings, in which:
figure 1 illustrates an example apparatus embodiment comprising a number of electronic components, including memory and a processor, according to one embodiment of the present disclosure;
figure 2 illustrates an example first virtual reality view of a scene including a plurality of distinct audio sources;
figure 3 illustrates a plan view of the scene shown in the first virtual reality view of figure 2;
figures 4 illustrates the example first virtual reality view of figure 2 with added audio-source-graphics to identify the location of the distinct audio sources in the first virtual reality view and a selection of the distinct audio sources;
figure 5 illustrates a plan view of a change from the first virtual reality view to the second virtual reality view, the first and second virtual reality views having different points of view;
figure 6 illustrates a computer generated model of the scene from the second point of view to provide the second virtual reality view;
figure 7 illustrates an example in which a plurality of virtual reality content capture devices are capturing a scene and the second virtual reality view is provided by virtual reality content from a second virtual reality content capture device and wherein a first virtual reality content capture device provides virtual reality content for the first virtual reality view;
figure 8 illustrates an example in which in a first virtual reality view, one audio source is within the field of view and another is not;
figure 9 illustrates a flowchart according to an example method of the present disclosure;
figure 10 illustrates schematically a computer readable medium providing a program;
figure 11 illustrates an example plan view of a user and their associated virtual reality view at a first viewing direction and a second viewing direction wherein the distinct audio sources have an angular separation greater than an angular extent of the field of view of the virtual reality view;
figure 12 illustrates a plan view of points of view of the first and second virtual reality view; and
figure 13 illustrates an example user input to cause the display of the second virtual reality view.

### Description of Example Aspects

Virtual reality (VR) may use a VR display comprising a headset, such as glasses or goggles or virtual retinal display, or one or more display screens that surround a user to provide the user with an immersive virtual experience. A virtual reality apparatus, using the VR display, may present multimedia VR content representative of a scene to a user to simulate the user being virtually present within the scene. The virtual reality scene may replicate a real world scene to simulate the user being physically present at a real world location or the virtual reality scene may be computer generated or a combination of computer generated and real world multimedia content. The virtual reality scene may be provided by a panoramic video (such as a panoramic live broadcast or pre-recorded content), comprising a video having a wide or 360° field of view (or more, such as above and/or below a horizontally oriented field of view). The user may then be presented with a VR view of the scene and may, such as through movement of the VR display, move the VR view to look around the scene.

The VR content provided to the user may comprise live or recorded images of the real world, captured by a VR content capture device, for example. As the VR scene is typically larger than a portion a user can view with the VR display, the VR apparatus may provide for panning around of the VR view in the VR scene based on movement of a user's head or eyes. For example, the field of view in the horizontal plane of a VR display may be about 120° but the VR content may provide 360° video imagery. Thus, the field of view of the VR view provided by the VR display is less than the total spatial extent of the VR content.

Audio properties of audio sources in the scene may include the absolute or relative levels of audio received from multiple distinct audio sources. The levels may, among others, comprise volume, bass, treble or other audio frequency specific properties, as will be known to those skilled in audio mixing. Further, for spatial audio that is rendered such that it appears to a listener to be coming from a specific direction, the spatial position of the audio source may be controlled. The spatial position of the audio may include the degree to which audio is presented to each speaker of a multichannel audio arrangement, as well as other 3D audio effects.

For conventional television broadcasts and the like, audio mixing or control may be performed by a director or sound engineer using a mixing desk, which provides for control of the various audio levels. However, for virtual reality content, which may provide an immersive experience comprising a viewable virtual reality scene greater than the field of view of a VR user and with audio sources at different locations in that scene, control of audio levels is complex.

A VR content capture device is configured to capture VR content for display to one or more users. A VR content capture device may comprise one or more cameras and one or more (e.g. directional and/or ambient) microphones configured to capture the surrounding visual and aural scene from a point of view. An example VR content capture device is a Nokia OZO camera of Nokia Technologies Oy. Thus, a musical performance may be captured (and recorded) using a VR content capture device, which may be placed on stage, with the performers moving around it or from the point of view of an audience member. In each case a consumer of the VR content may be able to look around using the VR display of a VR apparatus to experience the performance at the point of view of the capture location as if they were present.

Typically, in addition to the audio received from the microphone(s) of the VR content capture device or as an alternative, further microphones each associated with a distinct audio source may be provided. The audio of VR content may include ambient audio of the scene (captured by one or more microphones possibly associated with a VR content capture device(s)), directional ambient audio (such as captured by directional microphones associated with a VR content capture device) and audio source specific audio (such as from personal microphones associated with distinct sources of audio in the scene). Thus, a distinct audio source may have a microphone configured to primarily detect the audio from that source or a particular area of the scene, the source comprising a performer or instrument or the like. In some examples, distinct audio sources may comprise audio sources with location trackable microphones that are physically unconnected to the VR content capture device.

Thus, microphones may be provided at one or more locations within the scene captured by the VR content capture device to each capture audio from a distinct audio source. For example, using the musical performance example, a musician and/or their instrument may have a personal microphone. Knowledge of the location of each distinct audio source may be obtained by using transmitters/receivers or identification tags to track the position of the audio sources, such as relative to the VR content capture device, in the scene captured by the VR content capture device.

Audio sources may be grouped based on the type of audio that is received from the audio sources. For example, audio type processing of the audio may categorise the audio as speaking audio or singing audio. It will be appreciated other categories are possible, such as speaking, singing, music, musical instrument type, shouting, screaming, chanting, whispering, a cappella, monophonic music and polyphonic music. A group of the audio sources may be automatically selected for subsequent control.

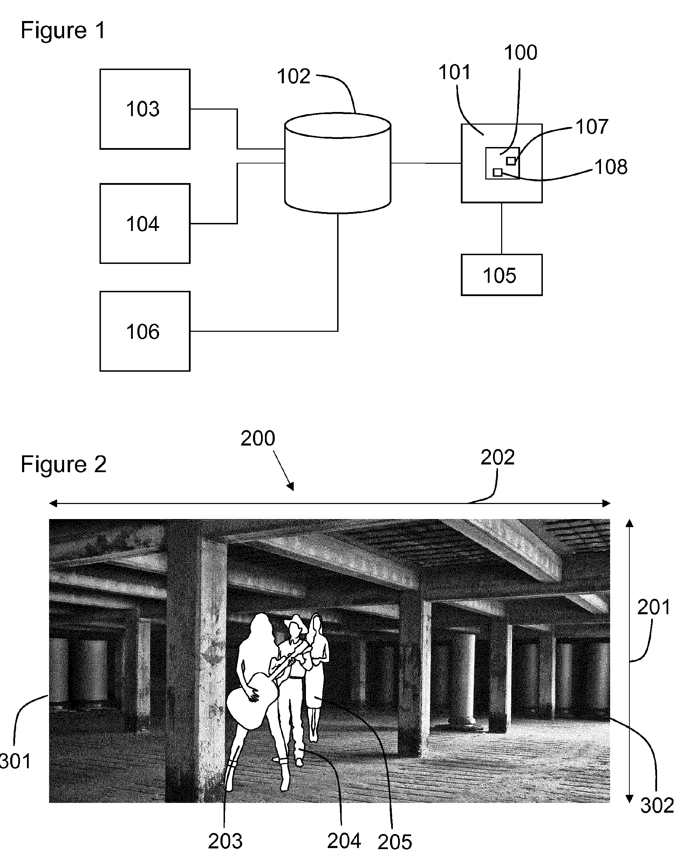

Control of the audio properties of a plurality of distinct audio sources present in VR content captured of a scene is provided by the example apparatus 100 of Figure 1. The apparatus 100 may form part of or be in communication with a VR apparatus 101 for presenting VR content to a user. A store 102 is shown representing the VR content stored in a storage medium or transiently present on a data transmission bus as the VR content is captured and received by the VR apparatus 101. The VR content is captured by at least one VR content capture device 103 and 104. In this example, a first VR content capture device 103 is shown providing the VR content, although an optional second VR content capture device 104 may also provide second VR content. A director (user) may use a VR head set 105 or other VR display to view the VR content and provide for control of the audio properties of a selected plurality of distinct audio sources present in the VR content. Information representative of the location of the distinct audio sources in the scene may be part of or accompany the VR content and may be provided by an audio source location tracking element 106.

The apparatus 100 is configured to provide for control of audio properties of the distinct audio sources, such as during capture of the VR content or of pre-recorded VR content.

The apparatus 100 may provide for control of the audio properties by way of an interface in the VR view provided to a director while viewing the VR content 102 using the VR display 105. Accordingly, the VR apparatus 101 may provide signalling to the apparatus 100 to indicate where in the VR scene the director is looking such that it can be determined where in the VR view the distinct audio sources are located. Thus, the apparatus 100 may determine the spatial location of the audio sources within the VR view presented to the director based on this VR view data from the VR apparatus 101 and/or audio source location tracking information from or captured by the audio source location tracking element 106.

In this embodiment the apparatus 100 mentioned above may have only one processor 107 and one memory 108 but it will be appreciated that other embodiments may utilise more than one processor and/or more than one memory (e.g. same or different processor/memory types). Further, the apparatus 100 may be an Application Specific Integrated Circuit (ASIC). The apparatus 100 may be separate from and in communication with the VR apparatus 101 or, as in Figure 1, may be integrated with the VR apparatus 101.

The processor 107 may be a general purpose processor dedicated to executing/processing information received from other components, such as VR apparatus 101 and audio source location tracking element 106 in accordance with instructions stored in the form of computer program code on the memory. The output signalling generated by such operations of the processor is provided onwards to further components, such as VR apparatus 101 or to a VR content store 102 for recording the VR content with the audio levels set by the apparatus 100.

The memory 108 (not necessarily a single memory unit) is a computer readable medium (solid state memory in this example, but may be other types of memory such as a hard drive, ROM, RAM, Flash or the like) that stores computer program code. This computer program code stores instructions that are executable by the processor, when the program code is run on the processor. The internal connections between the memory and the processor can be understood to, in one or more example embodiments, provide an active coupling between the processor and the memory to allow the processor to access the computer program code stored on the memory.

In this example the processor 107 and the memory 108 are all electrically connected to one another internally to allow for electrical communication between the respective components. In this example the components are all located proximate to one another so as to be formed together as an ASIC, in other words, so as to be integrated together as a single chip/circuit that can be installed into an electronic device. In other examples one or more or all of the components may be located separately from one another.

Figure 2 shows a first VR view 200 of a scene captured by a VR content capture device. In this example, the VR view 200 comprises video imagery captured of a real world scene by first VR content capture device 103. The VR view may be provided for presentation to a user by the VR apparatus 101 and the VR display 105. As the video imagery is VR content, the spatial extent of the VR view 200 is less than the total spatial extent of the video imagery and accordingly the user may have to turn their head (or provide other directional input) to view the total spatial extent. Thus, the field of view of the VR view 200 comprises the spatial extent or size of the VR view 200 as shown by arrows 201 and 202 demonstrating the horizontal and vertical size (for a rectangular field of view but other shapes are possible). The point of view of the VR view 200, in this example, is dependent on the geographic location of the VR content capture device in the scene when the VR content was captured. For imaginary or computer generated VR content, the point of view may be the virtual location in an imaginary space.

The VR view 200, in this example, includes three distinct audio sources comprising a first musician 203, a second musician 204 and a singer 205. Each of the distinct audio sources 203, 204, 205 includes a personal microphone associated with the audio source. For example, each of the audio sources may include a lavalier microphone or other personal microphone type. The microphones are location trackable such that the audio source location tracking element 106 can determine their position in the scene.

The apparatus 100 is configured to use the spatial location of each of a selected plurality of the distinct audio sources 203, 204, 205 in the virtual reality content (provided by store 102) captured of a scene for providing advantageous control of their audio properties. The spatial location information may be received directly from the audio source location tracking element 106 or may be integrated with the VR content.

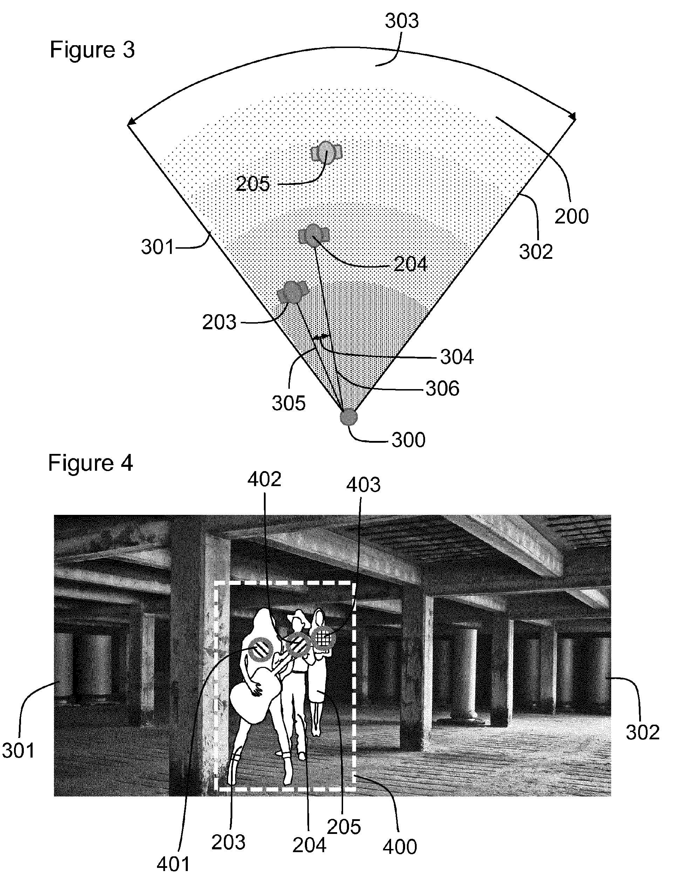

Figure 3 shows a plan view of the scene including the distinct audio sources 203, 204, 205. A point of view 300 of the VR view 200 is shown by a circle. The point of view 300 therefore shows the geographic position of the VR content capture device 103 relative to the distinct audio sources 203, 204, 205 in the scene. The lines 301 and 302 extending from the point of view 300 illustrate the edges of the horizontally-aligned extent of the field of view of the VR view 200 and thus arc 303 is analogous to the horizontal extent of the field of view 202 in Figure 2.

As can be appreciated from the plan view of Figure 3, the distinct audio sources 203, 204 and 205 are geographically spaced apart but from the point of view 300, there is little angular separation between them. Thus, an angle 304 between a line of sight 305 to the audio source 203 from the point of view 300 and a line of sight 306 to the audio source 204 from the point of view 300 may be less than a first predetermined angular separation.

Where control of audio properties of the distinct audio sources requires selection of the audio source 203, 204, 205 based on the direction of the VR view 200, a small angular separation between audio sources may make correct selection of a particular audio source difficult. Thus, to control the audio properties of a distinct audio source, the VR apparatus 101 or other apparatus in communication therewith may identify an audio source to control based on that audio source being the focus of a gaze of a user, such as being at the centre of the VR view or aligned with a target overlaid in the VR view. As will be appreciated, when the angular separation between the audio sources is small it may be difficult for the user to precisely select an audio source to control, particularly if the physical movement of the VR display 105 (which may be head mounted) is used as input, due to small (perhaps unintentional) movements by the user. Further, it may be difficult for the apparatus to select an audio source given measurement tolerances or overlapping (from the point of view 300) of the distinct audio source locations.

Figure 4 shows the same VR view 200 with the distinct audio sources selected. In this example, the selection of the distinct audio sources is user performed. Thus, a user may select one, a subset or all of the distinct audio sources present in a scene or the VR view 200. For example, the user may select the particular distinct audio sources that have the small angular separation. In this or other examples, the selection of the audio sources may be automatically provided. The automatic selection may be based on or include (i) one or more or all distinct audio sources in a particular scene; (ii) only those audio sources that are generating audio at a present time; (iii) one those audio sources that are generating audio within a particular (recent, for example) time window; (iv) one those audio sources that are visible in the VR view 200.

In Figure 4, the user has drawn a bounding box 400 around the distinct audio sources 203, 204, 205 to select them.

As shown in Figure 2, at least two (audio sources 203 and 204) of said selected plurality of distinct audio sources 203, 204, 205 have an angular separation that is within a first predetermined angular separation of one another in the first virtual reality view 200. The first predetermined angular separation may be 25°, 20°, 15°, 10°, 8°, 6°, 4°, 2° or less.

In this example, the apparatus 100 may receive the positions of each of the audio sources relative to the point of view 300 and calculate the angular separation between audio sources. In other examples, a different apparatus may provide the angular separation result(s), such as the element 106. In other examples, the video imagery may be tagged with the position of the audio sources in its field of view 201, 202 and a value equivalent to an angular separation may be calculated based on the positon of the tags in the video imagery. In other examples, the linear distance between the tags in the video imagery of the first VR view may be used. It will be appreciated that the linear distance between distinct audio sources or tags thereof in the VR view is equivalent to determination of the angular separation.

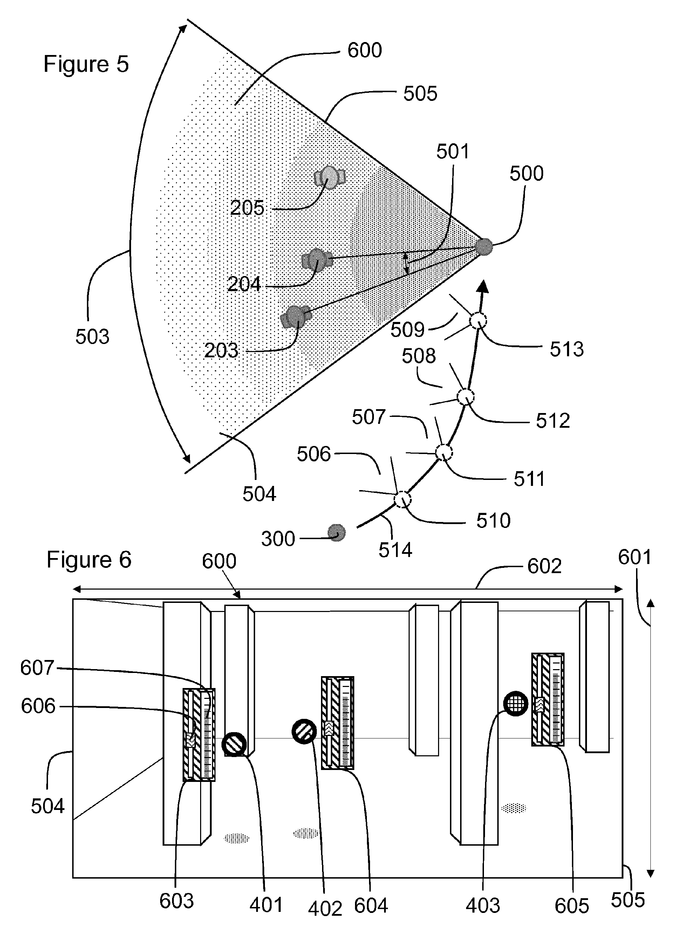

With reference to figures 5 and 6, a second point of view 500 is shown, as well as the first point of view 300. Movement of the point of view from the first point of view 300 to the second point of view 500 and thereby providing a second virtual reality view 600 different to the first virtual reality view 200 provides for effective individual selection and control of the audio properties of the distinct audio sources 203 and 204. Thus, with the movement of the point of view to the second point of view 500, including any required rotation of the field of view to point towards the distinct audio sources, the second VR view 600 shows the distinct audio sources 203, 204 more angularly spaced than in the first VR view 200.

Accordingly, the apparatus 100 provides for display of a second virtual reality view 600 from the different, second point of view 500, said second point of view 500 satisfying a predetermined criterion. The predetermined criterion comprises determination of a point of view from which said at least two of said selected plurality of distinct audio sources 203, 204 have an angular separation 501 that is equal to or greater than a second predetermined angular separation in the second virtual reality view 600. The second predetermined angular separation is, as will be appreciated, greater than the first predetermined angular separation to provide for easier selection and control of the audio properties of the audio sources. The second predetermined angular separation may be 5°, 10°, 15°, 20°, 25°, 30° or more.

Further, the predetermined criterion also requires the at least two selected distinct audio sources 203, 204 to be within a field of view 601, 602 of the second virtual reality view 600, the horizontal component of which is shown as arc 503 in Figure 5 between the edges of the field of view 504, 505. In one or more examples, the predetermined criterion may also require the at least two selected distinct audio sources 203, 204 to be within a field of view 601, 602 of the second virtual reality view 600 and within a predetermined margin distance of an edge of the field of view. This may be advantageous to prevent presentation of graphics, for example, at the very edges of a user's view.

Thus, the apparatus 100 advantageously provides a second virtual reality view 600 by way of movement, such as translation, of the point of view of the VR view, including any required rotation of the field of view to thereby provide for individual selection and control, in the second virtual reality view 600, of audio properties of said at least two distinct audio sources 203, 204. The translation of the point of view may comprise translation to a second point of view that lies within a predetermined distance of a substantially horizontal plane with respect to the first virtual reality view. Thus, the determination of the second point of view 500 may be restricted to lie in the same horizontal plane (or within a predetermined distance thereof) as at least one of the distinct audio sources, rather than comprising an overhead point of view for example.

Various strategies may be used for determination of the second point of view 500. For example, random locations may be tested against the predetermined criterion until it is satisfied. In other examples, a connecting line, may be determined between the audio sources that have a small angular separation and a "new view" line perpendicular to the connecting line and lying in a (e.g. horizontal) plane of the distinct audio sources may be determined. A position along the new view line that provides the second predetermined angular separation may be selected as the second point of view 500. It will be appreciated that a variety of algorithms may be developed to determine the second point of view.

With reference to Figure 4, the apparatus may be configured to provide for display of a distinct audio source graphic at a location in the first virtual reality view to associate it with the distinct audio source. In Figure 4, a first audio-source-graphic 401 is provided at a position overlying the first musician 203, a second audio-source-graphic 402 is provided overlying the second musician 204 and a third audio-source-graphic 403 is provided overlying singer 205. The placement of the audio-source-graphics 401, 402, 403 may be based on the location information from element 106 or associated with the VR content in store 102 along with information about the orientation of the VR view 200, such as from VR apparatus 101. The audio-source-graphic may be unique to one another to provide for ready identification of the distinct audio source with which it is associated. For example, the audio-source-graphics may be have different colours, patterns or shapes to make it easier to follow the distinct audio source between the first and second VR views 200, 600.

The first VR view 200 is provided by video imagery captured by a VR content capture device 103. However, from the second point of view 500, determined to be an advantageous position for viewing the distinct audio sources such that they can be individually selected for control of audio properties, no video imagery may be available. Accordingly, the second VR view 600 may not comprise video imagery and may instead comprise a computer generated model of the scene with the audio-source-graphics 401, 402, 403 and/or representations of the distinct audio sources 203, 204, 205 placed in the model at virtual locations corresponding to their actual location in the VR content of the scene.

In one or more examples, the model may comprise a three dimension virtual space showing only or at least the audio-source-graphics 401, 402, 403. In one or more examples, the model may comprise a wire frame model showing one or more features of the scene with the audio source graphics placed therein. The wire frame model may have graphics applied to the wire frame for increased realism. The graphics may be extracted from the video imagery of the VR content or may be generic or predetermined. The detail of the wire frame model may vary depending on the information available for generating the model and the position of the second point of view 500.

The computer-generated model may be generated based on geographic location information of the distinct audio sources, such as from audio source location tracking element 106 and information regarding the position of the second point of view 500 and the viewing direction. Thus, such a model may be relatively sparse on detail other than the audio-source graphics positioned in a perceived 3D space in the second VR view 600. The model may be based on spatial measurements of said scene from one or more sensors (not shown). Accordingly, at the time of capture of the VR content or a different time, sensor information may provide position measurements of the scene such that a model can be generated. The sensor information may form part of the VR content. The VR content capture devices used to obtain the video imagery for the first VR view 200 may provide for creation of a depth map comprising information indicative of distance to objects present in the scene. The depth information from the first point of view 300 may be used to create an approximation of the scene from the second point of view 500. It will be appreciated that when information about a scene from a single point of view is used, information about features of the scene obscured by other features will not be available. Those obscured features may, in the real world, be visible from the second point of view. However, assumptions about the size and shape of the features in the scene may have to be made in order to create the model for the second point of view. In some examples, a plurality of VR content capture devices 103, 104 are used to capture VR content of the scene and a depth map from each of the plurality of VR content capture devices may be combined to create the model from the second point of view 500. In other examples, a model of the scene may be predetermined and available for use by the apparatus 100. For example, a predetermined model for a famous concert venue may already be available.

In Figure 4, the outline of the pillars present in the video imagery of the first VR view 200 are recreated as cuboid blocks in the wire frame model. The display of a model and the corresponding positioning of the audio-source-graphics allows a user to readily appreciate how the VR view has changed and not to be confused or disoriented. Accordingly, the user is able to appreciate that the VR view has moved to an improved position and can readily link the audio-source graphics 401, 402, 403 to the video imagery of the first musician 203, the second musician 204 and the singer 205.

The VR head set 105 or other VR display may include speakers to present spatial audio to the user. Thus, the audio may be presented to the user such that it appears to come from a direction corresponding to the position of the distinct audio source in the current VR view 200, 600. Accordingly, in addition to providing for display of the second VR view from the second point of view 500, the audio of at least the distinct audio sources 203, 204, 205 may be presented in accordance with the second point of view 500 and the second VR view 600. Thus, the relative position of the second VR view 600 and the distinct audio sources may be used to provide for rendering and presentation of spatial audio in accordance with the second point of view 500 and the second VR view 600. Methods of spatial audio processing may be known to those skilled in the art and an appropriate spatial audio effect may be applied to transform the spatial positon of the audio. As an example, the known method of Vector Base Amplitude Panning (VBAP) may be used to pan a sound source to a suitable position between loudspeakers in a multichannel loudspeaker arrangement, such as 5.1. or 7.1. or the like. As another example, when listening audio through headphones with binaural rendering techniques, the effect of an audio source arriving from a certain location in the scene can be accomplished by filtering the audio source by such a head related transfer function (HRTF) filter which models the transfer path from the desired sound source location in the audio scene to the ears of the listener.

With reference to Figure 6, the user may now more easily use their view direction to select an individual audio source and provide user input to control the audio properties of the individually selected audio source. Thus, the second point of view 500 provides an advantageous position from which to make the audio adjustments. The VR view 600 provides an advantageous initial view from which to make the individual selections. Thus, for a VR apparatus that controls the view direction of the VR view in accordance with user-head position, the second VR view may be initially displayed and then view direction input from the user may be used to change from the second VR view but maintain the second point of view 500 to individually select the audio sources. For VR apparatus that may use a non-view-direction based selection process, the audio sources may be selectable from the second VR view 600.

The apparatus 100 may be configured to provide for display in the second virtual reality view 600 of one or more audio control graphics 603, 604, 605 each associated with one of the distinct audio sources or the corresponding audio-source-graphics 401, 402, 403. The audio control graphics may be displayed adjacent the audio-source-graphics or may replace them. The audio control graphics for a particular audio source may only be displayed in response to a selection input by the user.

The control of the audio properties may be provided by a user input device, such as a hand held or wearable device. Thus, the audio control graphics may provide for feedback of the control of the audio properties associated with one or more of the distinct audio sources. As can be seen in figure 6, sliders 606 are provided in the audio source graphic to show the current level of the audio property being controlled. The audio control graphics, in this example, also include a current level meter 607 to show the current audio output from its associated distinct audio source. In some examples, the user of the VR apparatus 101 may be able to virtually manipulate the audio control graphics 603, 604, 605 to control the audio properties of each of the distinct audio sources. For example, the user may be able to reach out and their hand or finger may be detected and virtually recreated in the second VR view 600 for adjustment of the sliders 606. Accordingly, the audio control graphics 603, 604, 605 may provide a controllable user interface configured to, on receipt of user input thereto, control the audio properties associated with one or more of the distinct audio sources.

The audio properties that may be controlled may be selected from one or more of volume, relative volume to one or more other distinct audio sources, bass, treble, pitch, spectrum, modulation characteristics or other audio frequency specific properties, audio dynamic range, spatial audio position, panning position among others.

The second point of view of the second VR view may be selected based on a criterion in which all of the selected distinct audio sources are separated by at least the second predetermined angular separation. It will be appreciated that in the first VR view 200 only a subset of the selected plurality of distinct audio sources 203, 204, 205 may have an angular separation less than the first predetermined angular separation. Thus, the second VR view may be selected based on a criterion in which at least the distinct audio sources that are too close together in the first VR view are separated by at least the second predetermined angular separation in the second VR view. In the second VR view, two or more of the selected distinct audio sources that where far apart in the first VR view may be within the first predetermined angular separation in the second VR view. Thus, in some examples, the second point of view and the second VR view may be selected based on the criterion that each of the selected plurality of distinct audio sources are angularly separated from any of the other selected plurality of distinct audio sources in at least one of the first VR view 200 and the second VR view 600. In one or more examples, a third VR view may be provided for display from a third point of view, different to the first and second point of view, to present any of the selected plurality of distinct audio sources that were not angularly separated from any other distinct audio source by at least the second predetermined angular separation in both the first and second VR views with an angular separation from any other of the selected distinct audio sources of at least the second predetermined angular separation.

With reference to Figure 5, the apparatus 100 may be configured, on transition between the first virtual reality view 200 and display of the second virtual reality view 600, to provide for display of one or more intermediate virtual reality views 506, 507, 508, 509, the intermediate virtual reality views having points of view 510, 511, 512, 513 that lie spatially intermediate the first 300 and second 500 points of view. Accordingly, rather than abruptly switching to the second VR view 600 from the first VR view 200, it may appear as though the point of view is progressively changing. As evident from figure 5, the point of view of the intermediate VR views is automatically and incrementally changed as well as the viewing direction. This may appear to a user as if that are being transported along arrow 514. Such a transition, including at least one intermediate VR view, may provide for low disorientation for the user when switching between the first and second VR views 200, 600.

In any of the examples provided herein, the display of the second VR view may be automatically provided (immediately or after a predetermined delay and/or user warning) upon determination that at least two of the selected distinct audio sources have an angular separation less than the first predetermined angular separation. Alternatively, upon determination that at least two of the selected distinct audio sources have an angular separation less than the first predetermined angular separation, the apparatus may be configured to provide for display of a prompt to the user in the first VR view 200 and, in response to a user instruction to transition to a different VR view, provide for display of the second VR view (with any intermediate VR views as appropriate). Thus, a user-actuatable graphic may be displayed suggesting a better point of view for control of the audio properties.

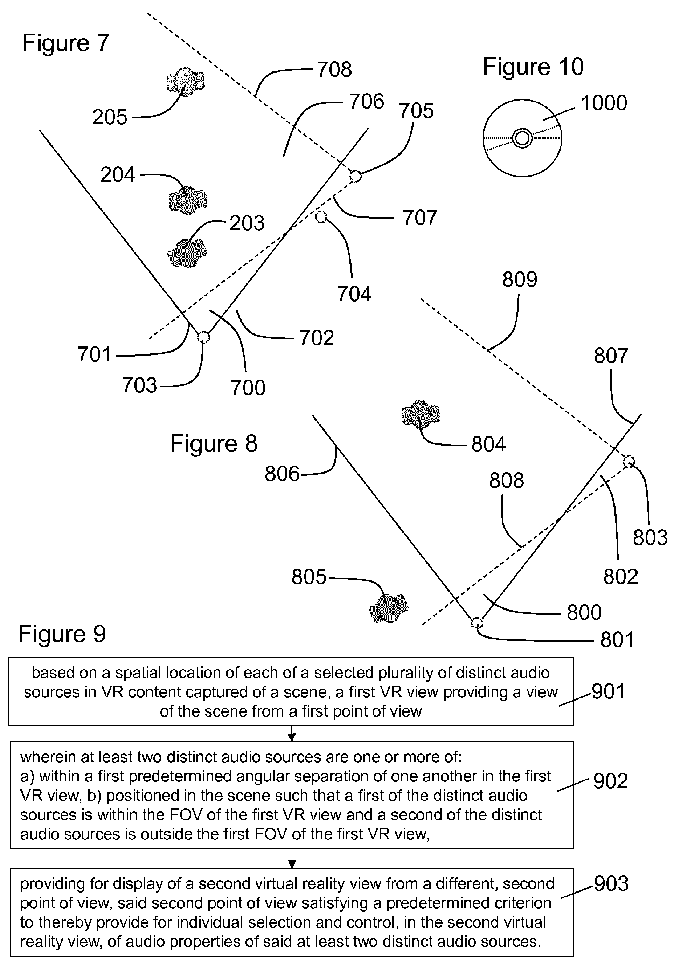

In the previous examples, the second VR view 600 is provided by a model of the scene possibly because video imagery from the second point of view 500 is not available. However, in some examples, more than one VR content capture device 103, 104 may be simultaneously capturing VR content of the same scene from different points of view. With reference to Figure 7, a first VR view 700 is diagrammatically shown by the minor area between lines 701 and 702 from the point of view 703. As in the previous examples, the first VR view 700 may be provided by video imagery obtained by the first VR content capture device 103. Also, the VR view 700 includes the first musician 203, the second musician 204 and the singer 205 in similar relative position to the previous examples. Thus, at least two of the distinct audio sources are within the first predetermined angular separation in the first VR view 700.

The apparatus 100 may be configured to determine a second point of view 704 from which the predetermined criterion may be satisfied. The second point of view 704 may be the optimum point of view with the greatest angular separation between the distinct audio sources. However, in this embodiment, the apparatus may determine that the second VR content capture device was located at a position within a predetermined threshold of the second point of view 704 at a third point of view 705. Thus, rather than generate a model of the scene for display as if located at the second point of view 704, the video imagery from the second VR content capture device 104 may provide the second VR view 706, diagrammatically shown by the minor area between lines 707 and 708 from the point of view 705.

In other examples, the apparatus 100 may be configured to evaluate the predetermined criterion from the points of view of any other VR content capture devices prior to calculating a point of view at which to generate/render a model based VR view. If the criterion is met by any of the other VR content, and in particular the point of view from which the VR content is captured, from the other VR content capture devices, then the apparatus may display a second VR view based on the video imagery of the identified VR content capture device.

It will be appreciated that one or more intermediate VR views, shown as 506, 507, 508, 509 in Figure 5, may be displayed on transition between the first VR view 700 and the second VR view 706. The intermediate VR views may be model based VR views.

Figure 8 shows a plan view of a scene showing a first VR view 800 (delimited by the solid lines 806, 807) from a first point of view 801 and a second VR view 802 from a second point of view 803 (delimited by dashed lines 808, 809). The scene includes two distinct audio sources; a first distinct audio source 804 and a second distinct audio source 805. In the first VR view 800, only the first distinct audio source 804 is visible, as the second distinct audio source 805 is outside the field of view (shown between solid lines 806, 807) of the first VR view 800. It will be appreciated that more than two distinct audio sources may be present in the scene.

The distinct audio sources 804, 805 are positioned in the scene such that the first 804 of the at least two selected distinct audio sources is within the field of view 806,807 of the first virtual reality view 800 and the second 805 of the at least two selected distinct audio sources is outside the first field of view 806, 807 of the first virtual reality view 800. Thus, while a user of the VR apparatus 105 may turn their head or provide some other view-direction-changing-input to see the second distinct audio source, in the first VR view 800, at least one distinct audio source present in the scene is not within the field of view 806, 807.

As described in relation to the previous examples, the apparatus 100 is configured to provide for display of the second virtual reality view 802, such as following a user-instruction, the second VR view 802 satisfying a predetermined criterion. As with the previous examples, the predetermined criterion comprising a point of view 803 from which the first and second distinct audio sources 804, 805 are separated by at least a second predetermined angular separation in the second virtual reality view 802 and the at least two selected distinct audio sources are within the field of view 808, 809 of the second virtual reality view 802 to thereby provide for individual selection and control, in the second virtual reality view 802, of audio properties of said at least two distinct audio sources 804, 805.

It will be appreciated that in the first VR view 800, the selected plurality of distinct audio sources may include at least two that have an angular separation less than the first predetermined angular separation and/or at least two that are within and outside the field of view respectively. In any of these combinations of distinct audio source arrangements, a second VR view may be provided that has a point of view that places the distinct audio sources within the field of view and provides an angular separation between any two of the distinct audio sources greater than the second predetermined separation in at least one of the first VR view and the second VR view. In some examples, the point of view of the second VR view is such that each of the selected distinct audio sources have the required angular separation and are within the field of view of the second VR view.

The provision of the second VR view is advantageous as the spatial positioning of the distinct audio sources remains in accordance with their position in the real world scene when the VR content was captured and the point of view is altered to provide an appropriate position from which to view the distinct audio sources and enable easy control of the audio properties. In the above examples, the field of view of the first VR view and the field of view of the second VR view are substantially equal. A typical horizontal extent of the field of view in virtual reality is 120° and this may be substantially preserved between the first and second VR view. The field of view of the second VR view may be less than or equal to the field of view of the first VR view. In other examples, the field of view, such as the angular extent of the field of view may be increased between the first VR view and the second VR view.

The audio-source-graphics and/or audio control graphics (collectively VR graphics) may be generated by the VR apparatus 101 based on signalling received from apparatus 100. These VR graphics are each associated with a distinct audio source and thus, in particular, the VR graphics are associated with the location of the microphone of the distinct audio sources. Accordingly, the apparatus 100 may receive audio source location signalling from the audio location tracking element 106 and provide for display, using the VR apparatus 101, of the VR graphics positioned at the appropriate locations in the VR view. In this example, the VR graphics are displayed offset by a predetermined amount from the actual location of the microphone so as not to obscure the user's / director's view of the person/object (i.e. audio source) associated with the microphone in the VR view.

Throughout the disclosure, where the term "director" is used to refer to the user of the VR apparatus 101 it will be appreciated that this designation is not any more limiting than use of the term "user".

Figure 9 shows a flow diagram illustrating the steps of based on 901 a spatial location of each of a selected plurality of distinct audio sources in virtual reality content captured of a scene, a first virtual reality view providing a view of the scene from a first point of view and having a field of view less than the spatial extent of the virtual reality content, wherein at least two of said selected plurality of distinct audio sources are one or more of 902:
a) within a first predetermined angular separation of one another in the first virtual reality view,
b) positioned in the scene such that a first of the at least two selected distinct audio sources is within the field of view of the first virtual reality view and a second of the at least two selected distinct audio sources is outside the first field of view of the first virtual reality view, providing for display of a second virtual reality view from a different, second point of view, said second point of view satisfying a predetermined criterion 903, the predetermined criterion comprising a point of view from which said at least two of said selected plurality of distinct audio sources are separated by at least a second predetermined angular separation in the second virtual reality view greater than the first predetermined angular separation and the at least two selected distinct audio sources are within a field of view of the second virtual reality view to thereby provide for individual selection and control, in the second virtual reality view, of audio properties of said at least two distinct audio sources.

Figure 10 illustrates schematically a computer/processor readable medium 1000 providing a program according to an example. In this example, the computer/processor readable medium is a disc such as a digital versatile disc (DVD) or a compact disc (CD). In other examples, the computer readable medium may be any medium that has been programmed in such a way as to carry out an inventive function. The computer program code may be distributed between the multiple memories of the same type, or multiple memories of a different type, such as ROM, RAM, flash, hard disk, solid state, etc.

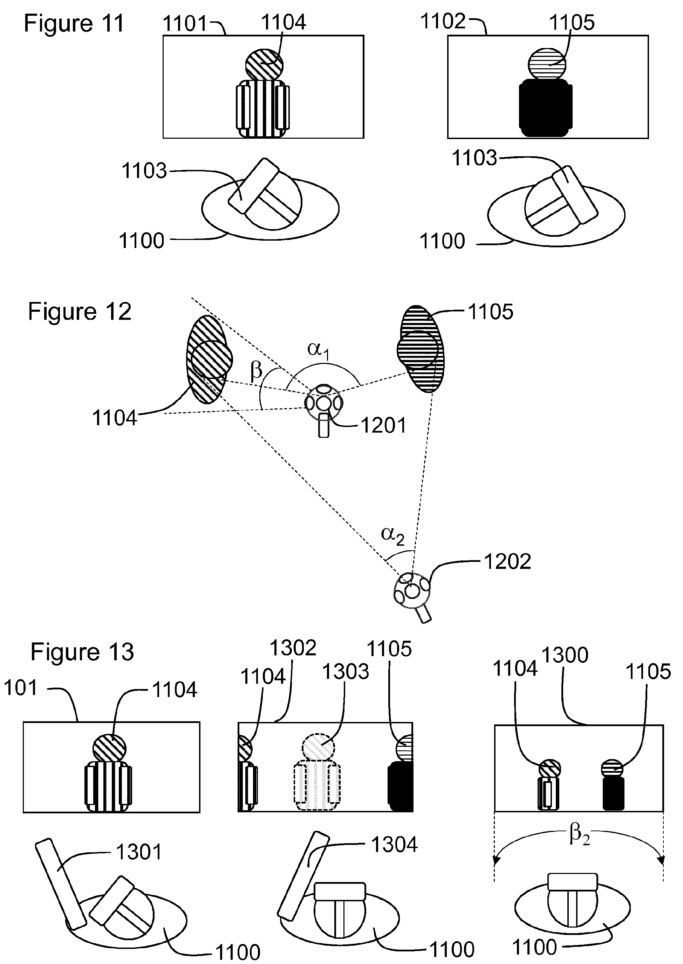

Figure 11 shows two example virtual reality views 1101 and 1102 presented to a user viewing the virtual reality content with two different viewing directions. A user 1100 is illustrated in plan-view wearing a virtual reality headset 1103. The user 1100 looks generally left to be presented with the first virtual reality view 1101 and generally right to be presented with the second virtual reality view 1102. The relative directions of the first and second virtual reality view 1101, 1102 described is for example only and may vary but, as will be described below, Figure 11 illustrates a situation in which first and second distinct audio sources 1104 and 1105 are positioned in the scene such that they have an angular separation from a first point of view greater than an angular extent of the field of view of the first virtual reality view 1101 (and/or the second virtual reality view 1102).

The first distinct audio source 1104 happens to comprise a first actress and the second distinct audio source 1105 comprises a second actress engaged in a dialogue exchange. The first and second actresses have an angular separation of α₁. Figure 12 shows the point of view of the user 1100, represented as a VR content capture device 1201. Figure 12 also shows, diagrammatically, the field of view of the virtual reality views 1101, 1102, which comprises the angle β in the horizontal direction. Thus, the angle α₁, comprising the angular separation of the distinct audio sources is greater than the corresponding (i.e. horizontal) angular extent, β, of the field of view of the virtual reality view. In other words, it is not possible to provide a virtual reality view from the point of view 1201 that includes both the first and second distinct audio sources 1104, 1105. For the user, this means that in order to watch the dialogue between the first actress 1104 and second actress 1105, they have to keep changing their viewing direction, i.e. potentially moving their head back and forth so they can see each actresses speak. This may make for bothersome consumption of the VR content.

The apparatus 100 may provide for display of a further VR view 1300 from a different point of view 1202, in which the distinct audio sources 1104, 1105 are within the field of view β₂ of the further virtual reality view 1300 to thereby provide for viewing of the selected plurality of distinct audio sources in the second virtual reality view. The angular separation of the distinct audio sources from the second point of view 1202 is α₂ which is less than α₁ and less than the angular extent β₂ of the field of view of the further VR view 1300. Thus, the user is able to more easily follow the conversation of the actresses 1104, 1105. The further VR view 1300 from the second, different, point of view 1202 may further provide for individual selection and control of audio properties of said at least two distinct audio sources 1104, 1105.

In this example, the scene containing the distinct audio sources 1104, 1105 was captured by two, spaced, VR content capture devices (shown representing the points of view 1201, 1202) and thus the apparatus 100 provided for identification of VR content from a different content capture device that satisfied (part of) the predetermined criterion to provide the distinct audio sources 1104, 1105 in the same VR view 1300. In one or more other examples, the further VR view 1300 may be computer generated from VR content captured by one or more VR content capture devices.

Figure 13 illustrates a user command to cause the provision of the further virtual reality view 1300. Figure 13 shows the first VR view 1101 similar to Figure 11. The apparatus 100 provides for user-selection of the first distinct audio source 1104 by way of a gesture of the user 1100, such as a free space user gesture. In this example, the gesture comprises the user reaching out with their hand 1301 to virtually grab the first distinct audio source 1104. It will be appreciated that other user input could be used to select the first distinct audio source 1104. The apparatus 100 then provides for identification of a further point in the scene, as shown by virtual reality view 1302. The further point comprises where the user would like the first distinct audio source 1104 positioned relative to the second distinct audio source 1105 while watching the VR content. In particular, the further point comprises a desired angular separation between the distinct audio sources 1104, 1105. In one or more examples, the identification of the further point may be provided by the user virtually moving or dragging the first distinct audio source to a better viewing position and then "releasing" their selection. This drag user input may provide an intuitive way of identifying the further point.

In one or more examples, the apparatus 100 may provide for feedback of the current position of the selected distinct audio source (the dragged audio source) as the user moves or "drags" the selected distinct audio source. The feedback may be provided by display of a dragged-audio-source-graphic at a current position corresponding to the user input. The dragged-audio-source-graphic may comprise an icon representing the distinct audio source or an image or ghosted image 1303 of the distinct audio source (i.e. the actress). In this example, the dragging gesture requires the user to move their hand or arm and thus the user's arm shown at 1304 has moved to cause the virtual movement of ghosted image 1303 representing the distinct audio source 1104.

In one or more examples, the apparatus 100 may provide for feedback of the current position of the selected distinct audio source (the dragged audio source) as the user moves the selected distinct audio source by way of a spatial audio effect in which the perceived position of the audio from the first distinct audio source 1104 corresponds to the current position identified by the user's gesture. In this example, both the visual feedback of the image 1303 and the spatial audio effect is provided, but in other examples one or none of this feedback may be provided.

Once the user has provided user input to identify a preferred position for the first distinct audio source 1104 relative to the second distinct audio source 1105, the apparatus 100 may identify a point of view, from which VR content of the same scene is available, that best satisfies the relative positioning of the first distinct audio source 1104 and the second distinct audio source 1105 indicated by the user input. For example, the apparatus may use predetermined VR-view-available criteria such as VR content having a point of within ± 5 or 10° or other degrees of the angular separation at the further point. The apparatus may then, if such VR content is available or computer-generatable, provide for display of the further VR view 1300. If VR content from an appropriate point of view is not available, the apparatus 100 may provide for indication of the same to the user.

It will be appreciated that the apparatus 100 may be provided with relative-separation-from-different-VR-views information indicative of the relative positon of the two or more distinct audio sources 1104, 1105 from a plurality of points of view at which VR content is available (e.g. from different VR content capture device positions when the scene was captured). Accordingly, the apparatus 100 may provide for feedback to a user during the virtual dragging gesture of one of the distinct audio sources, the feedback indicative of when the selected distinct audio source 1104 is at a position (or angular separation) relative to the second distinct audio source 1105 for which VR content from a different point of view is available. Accordingly, the apparatus 100 may determine, during the user-gesture to move one of the distinct audio sources, the current angular separation between the two distinct audio sources and provide for feedback to the user when the current angular separation is within a threshold of an angular separation indicated in the relative-separation-from-different-VR-views information. On receiving this "drag-position-is-valid" feedback the user may select the current position knowing that a VR view from a different point of view is available.

The drag-position-is-valid feedback may comprise one or more of visual feedback, haptic feedback and audio feedback. In one or more examples, the icon representing the distinct audio source or the image or the ghosted image 1303 of the distinct audio source (i.e. the actress) may be highlighted to provide the view-is-available feedback. In one or more examples, the visual feedback may be provided by display of a valid-position graphic associated with the dragged-audio-source-graphic 1303. The valid-position graphic may appear as a change in colour, shading, shape, highlight of or icon overlaid over the dragged-audio-source-graphic 1303. In one or more examples, the audio from the selected audio source that is virtually moved by the user is provided with an audio effect, such as a muffling effect, and the view-is-available feedback may provide the removal of the audio effect. Thus, the user may hear muffled audio while they are moving or "dragging" the distinct audio source to a better position and when they happen to reach a position in which the current angular separation is able to be satisfied by display of VR content from the different point of view, the audio may be presented un-muffled.

In one or more examples, the apparatus 100 may provide for selection of the second distinct audio source 1105 so that the apparatus 100 can appreciate which distinct audio sources the user is bringing together in order to provide the further VR view 1300. The selection of the second distinct audio source 1105 may be performed before, after or during the selection (and movement/dragging) of the first distinct audio source 1104.

The apparatus 100 may be configured to receive free space gesture input (or input via a input device such as a touchscreen electronic device) indicative of the user virtually grabbing or selecting the first and second distinct audio sources. In one or more examples, the apparatus 100 may be configured to automatically determine a counterpart distinct audio source based on the selection of a first distinct audio source and one or more of i) audio data indicative of which audio sources are generating audio in the scene over a recent predetermined time (which may include past and future audio from the current elapsed time through the VR content) and (ii) interaction data indicative of at least two or more distinct audio sources that are determined to be interacting. The interaction data may be generated manually during post-production of the video or automatically. For example, when two actresses are having a conversation with each other, they may be labelled as interacting in the interaction data.

Accordingly, on receipt of user input to move or select a distinct audio source and/or identify a preferred position for the first distinct audio source 1104 relative to the second distinct audio source 1105, the apparatus may be configured to determine the identity of the second distinct audio source based on one or more of further user-selection of the second distinct audio source, the audio data and the interaction data. Once the counterparties have been identified, the apparatus 100 may determine and provide for display of the further VR view 1300 on identification that VR content exists that has a point of view to satisfy the relative angular separation of the first and second distinct audio sources indicated by the user.

In the above examples reference is made to a specific example of selection and control of audio properties of said at least two distinct audio sources. However, it will be appreciated that the provision of the second virtual reality view may provide for individual selection of subjects in the virtual reality content for the control of other properties (i.e. instead of or in addition to audio properties). Thus, in one or more other examples, the distinct audio sources 203, 204, 205 may be referred to as distinct subjects. Identification of distinct subjects may be based on visual analysis of the virtual reality content, such as facial recognition or object recognition or identification tags associated with the subject when the virtual reality content was captured. In other examples, subjects may be "tagged" in the virtual reality content, such as by reference to metadata, which may be added during capture or in post-production or on the fly during play back. The properties that may be controlled may include one or more of audio properties, visual properties, and metadata properties associated with the subject. Thus, visual properties of the subjects in the virtual reality content may be edited by video processing techniques. Further, metadata linked to subjects in the virtual reality content may be controlled, added, deleted or modified.

User inputs may be gestures which comprise one or more of a tap, a swipe, a slide, a press, a hold, a rotate gesture, a static hover gesture proximal to the user interface of the device, a moving hover gesture proximal to the device, bending at least part of the device, squeezing at least part of the device, a multi-finger gesture, tilting the device, or flipping the device.

The apparatus shown in the above examples may be part of a VR apparatus, AR apparatus, part of a VR content capture device, a portable electronic device, a laptop computer, a mobile phone, a Smartphone, a tablet computer, a personal digital assistant, a digital camera, a smartwatch, a non-portable electronic device, a desktop computer, a monitor, wearable apparatus, a smart TV, a server, or a module/circuitry for one or more of the same.

Any mentioned apparatus/device/server and/or other features of particular mentioned apparatus/device/server may be provided by apparatus arranged such that they become configured to carry out the desired operations only when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/or firmware. The apparatus may comprise software loaded onto memory. Such software/computer programs may be recorded on the same memory/processor/functional units and/or on one or more memories/processors/ functional units.

In some examples, a particular mentioned apparatus/device/server may be pre-programmed with the appropriate software to carry out desired operations, and wherein the appropriate software can be enabled for use by a user downloading a "key", for example, to unlock/enable the software and its associated functionality. Advantages associated with such examples can include a reduced requirement to download data when further functionality is required for a device, and this can be useful in examples where a device is perceived to have sufficient capacity to store such pre-programmed software for functionality that may not be enabled by a user.

Any mentioned apparatus/circuitry/elements/processor may have other functions in addition to the mentioned functions, and that these functions may be performed by the same apparatus/circuitry/elements/processor. One or more disclosed aspects may encompass the electronic distribution of associated computer programs and computer programs (which may be source/transport encoded) recorded on an appropriate carrier (e.g. memory, signal).

Any "computer" described herein can comprise a collection of one or more individual processors/processing elements that may or may not be located on the same circuit board, or the same region/position of a circuit board or even the same device. In some examples one or more of any mentioned processors may be distributed over a plurality of devices. The same or different processor/processing elements may perform one or more functions described herein.

The term "signalling" may refer to one or more signals transmitted as a series of transmitted and/or received electrical/optical signals. The series of signals may comprise one, two, three, four or even more individual signal components or distinct signals to make up said signalling. Some or all of these individual signals may be transmitted/received by wireless or wired communication simultaneously, in sequence, and/or such that they temporally overlap one another.

With reference to any discussion of any mentioned computer and/or processor and memory (e.g. including ROM, CD-ROM etc), these may comprise a computer processor, Application Specific Integrated Circuit (ASIC), field-programmable gate array (FPGA), and/or other hardware components that have been programmed in such a way to carry out the inventive function.

The applicant hereby discloses in isolation each individual feature described herein and any combination of two or more such features, to the extent that such features or combinations are capable of being carried out based on the present specification as a whole, in the light of the common general knowledge of a person skilled in the art, irrespective of whether such features or combinations of features solve any problems disclosed herein, and without limitation to the scope of the claims. The applicant indicates that the disclosed aspects/examples may consist of any such individual feature or combination of features. In view of the foregoing description it will be evident to a person skilled in the art that various modifications may be made within the scope of the disclosure.

While there have been shown and described and pointed out fundamental novel features as applied to examples thereof, it will be understood that various omissions and substitutions and changes in the form and details of the devices and methods described may be made by those skilled in the art without departing from the scope of the disclosure. For example, it is expressly intended that all combinations of those elements and/or method steps which perform substantially the same function in substantially the same way to achieve the same results are within the scope of the disclosure. Moreover, it should be recognized that structures and/or elements and/or method steps shown and/or described in connection with any disclosed form or examples may be incorporated in any other disclosed or described or suggested form or example as a general matter of design choice. Furthermore, in the claims means-plus-function clauses are intended to cover the structures described herein as performing the recited function and not only structural equivalents, but also equivalent structures. Thus although a nail and a screw may not be structural equivalents in that a nail employs a cylindrical surface to secure wooden parts together, whereas a screw employs a helical surface, in the environment of fastening wooden parts, a nail and a screw may be equivalent structures.

## Claims

1. An apparatus comprising:
at least one processor; and
at least one memory including computer program code,
the at least one memory and the computer program code configured to, with the at least one processor, cause the apparatus to perform at least the following:
based on a spatial location of each of a selected plurality of distinct audio sources in virtual reality content captured of a scene, a first virtual reality view providing a view of the scene from a first point of view and having a field of view less than the spatial extent of the virtual reality content, wherein at least two of said selected plurality of distinct audio sources are one or more of:
a) within a first predetermined angular separation of one another in the first virtual reality view,
b) positioned in the scene such that a first of the at least two selected distinct audio sources is within the field of view of the first virtual reality view and a second of the at least two selected distinct audio sources is outside the field of view of the first virtual reality view, and
c) positioned in the scene such that the at least two of said selected plurality of distinct audio sources have an angular separation from the first point of view greater than an angular extent of the field of view of the first virtual reality view;
provide for display of a second virtual reality view from a different, second point of view, said second point of view satisfying a predetermined criterion, the predetermined criterion comprising a point of view from which said at least two of said selected plurality of distinct audio sources are spatially separated by at least a second predetermined angular separation in the second virtual reality view and the at least two selected distinct audio sources are within a field of view of the second virtual reality view to thereby provide for one or more of (i) individual selection and control, in the second virtual reality view, of audio properties of said at least two distinct audio sources and (ii) viewing of the selected plurality of distinct audio sources in the second virtual reality view.

2. The apparatus of claim 1, wherein the second virtual reality view from the different, second point of view comprises a computer-generated model of the scene in which said distinct audio sources are each represented by an audio-source-graphic provided at virtual locations in said computer-generated model corresponding to their geographical location in the scene.

3. The apparatus of claim 1 or claim 2, wherein said first virtual reality view is provided by video imagery of the scene.

4. The apparatus of claim 2, wherein the computer-generated model of the scene comprises a wire frame model of one or more features in the scene.

5. The apparatus of claim 3, wherein the second virtual reality view from the different, second point of view is provided by video imagery captured by a second virtual reality content capture device different to a first virtual reality content capture device that provided the virtual reality content for the first virtual reality view.

6. The apparatus of any preceding claim, wherein on transition between the first virtual reality view and display of the second virtual reality view, the apparatus provides for display of one or more intermediate virtual reality views, the intermediate virtual reality views having points of view that lie spatially intermediate the first and second point of views.

7. The apparatus of any preceding claim, wherein the apparatus, during display of said second virtual reality view, is configured to provide for presentation of audio of at least the selected distinct audio sources with a spatial audio effect such that audio generated by each of the audio sources is perceived as originating from their position in the second virtual reality view of the audio source.

8. The apparatus of any preceding claim, wherein the apparatus provides for display, at least in the second virtual reality view, of an audio control graphic to provide one or more of:
i) feedback of the control of the audio properties associated with one or more of the distinct audio sources; and
ii) a controllable user interface configured to, on receipt of user input thereto, control the audio properties associated with one or more of the distinct audio sources.

9. The apparatus of any preceding claim, wherein the apparatus provides for display of the second virtual reality view in response to a user instruction to change from the first virtual reality view.

10. The apparatus of claim 9, in which the user instruction comprises a drag user input to drag one of the at least two selected plurality of distinct audio sources at least towards a second of the at least two selected plurality of distinct audio sources.

11. The apparatus of claim 10, wherein the apparatus is caused to provide feedback, to the user, of the drag user input by providing for one or more of i) display of a dragged-audio-source graphic to show the position of the audio source being dragged and ii) presentation of spatial audio of the distinct audio source being dragged to audibly indicate the position of the audio source being dragged.

12. The apparatus of any preceding claim, wherein the selected plurality of distinct audio sources are one or more of:
i) user selected;
ii) automatically selected based on one or more of which distinct audio sources are actively providing audio and which are actively detected within the space.

13. The apparatus of any preceding claim, wherein following receipt of user input to control the audio properties of one or more of the selected distinct audio sources, provide for display of the first VR view.

14. A method, the method comprising based on a spatial location of each of a selected plurality of distinct audio sources in virtual reality content captured of a scene, a first virtual reality view providing a view of the scene from a first point of view and having a field of view less than the spatial extent of the virtual reality content, wherein at least two of said selected plurality of distinct audio sources are one or more of:
a) within a first predetermined angular separation of one another in the first virtual reality view,
b) positioned in the scene such that a first of the at least two selected distinct audio sources is within the field of view of the first virtual reality view and a second of the at least two selected distinct audio sources is outside the field of view of the first virtual reality view, and
c) positioned in the scene such that the at least two of said selected plurality of distinct audio sources have an angular separation from the first point of view greater than an angular extent of the field of view of the first virtual reality view;
providing for display of a second virtual reality view from a different, second point of view, said second point of view satisfying a predetermined criterion, the predetermined criterion comprising a point of view from which said at least two of said selected plurality of distinct audio sources are separated by at least a second predetermined angular separation in the second virtual reality view and the at least two selected distinct audio sources are within a field of view of the second virtual reality view to thereby provide for one or more of (i) individual selection and control, in the second virtual reality view, of audio properties of said at least two distinct audio sources and (ii) viewing of the selected plurality of distinct audio sources in the second virtual reality view.

15. A computer readable medium comprising computer program code stored thereon, the computer readable medium and computer program code being configured to, when run on at least one processor, perform at least the following:
based on a spatial location of each of a selected plurality of distinct audio sources in virtual reality content captured of a scene, a first virtual reality view providing a view of the scene from a first point of view and having a field of view less than the spatial extent of the virtual reality content, wherein at least two of said selected plurality of distinct audio sources are one or more of:
a) within a first predetermined angular separation of one another in the first virtual reality view,
b) positioned in the scene such that a first of the at least two selected distinct audio sources is within the field of view of the first virtual reality view and a second of the at least two selected distinct audio sources is outside the first field of view of the first virtual reality view, and
c) positioned in the scene such that the at least two of said selected plurality of distinct audio sources have an angular separation from the first point of view greater than an angular extent of the field of view of the first virtual reality view;
providing for display of a second virtual reality view from a different, second point of view, said second point of view satisfying a predetermined criterion, the predetermined criterion comprising a point of view from which said at least two of said selected plurality of distinct audio sources are separated by at least a second predetermined angular separation in the second virtual reality view and the at least two selected distinct audio sources are within a field of view of the second virtual reality view to thereby provide for one or more of (i) individual selection and control, in the second virtual reality view, of audio properties of said at least two distinct audio sources and (ii) viewing of the selected plurality of distinct audio sources in the second virtual reality view.
